# EUROPEAN PATENT APPLICATION

(11) **EP 1 640 045 A1**
(43) Date of publication of application: **29.03.2006**
(21) Application number: 03768354.7
(22) Date of filing: 26.12.2003
(51) Int. Cl.: A63F 13/00

(54) **GAME MACHINE AND CONTROL METHOD OF COMPUTER**

(30) Priority: 30.06.2003 JP 2003188484
(71) Applicant: Konami Corporation, Chiyoda-ku, Tokyo 100-6330 (JP)
(72) Inventor: ADACHI, Tatsumi, c/o Konami Corporation, Tokyo 100-6330 (JP)
(74) Representative: Winter, Brandl, Fürniss, Hübner Röss, Kaiser, Polte Partnerschaft Patent- und Rechtsanwaltskanzlei
(86) International application number: PCT/JP2003/016998
(87) International publication number: WO 2005/002698

(57) **Abstract**

A gaming device that can enhance reality of sound effects as they relate to motion of a gaming character object in a gaming space is provided. The gaming device includes an operation input portion (26) directing that the gaming character object disposed in the gaming space be moved on a moving plane of the gaming space, a control portion (24) counting the number of times a predetermined portion of the gaming character object makes contact with the moving plane according to directions given by the operation input portion (26), and a sound output portion (30) producing an output of a sound corresponding to a count taken by the contact count counting means when the predetermined portion of the gaming character object makes contact with the moving plane.

## Description

### TECHNICAL FIELD

The present invention generally relates to a gaming device and a method of controlling a computer, and more particularly to a technique for producing, in a favorable manner, an output of a sound of contact or the like generated when a predetermined portion of a gaming character object disposed in a gaming space makes contact with a moving plane in the gaming space as the gaming character object is moved on the moving plane.

### BACKGROUND ART

There is known a gaming program that moves a gaming character object disposed in a gaming space in accordance with an operation made on a controller, for example, letting the gaming character object run or walk using legs thereof. In such a gaming program, a rendition to enhance reality is given in which contact of a predetermined portion (a foot, or the like) of the gaming character with a floor is monitored, and when there is contact, an output of a sound of contact or the like is produced.

Conventional gaming programs, however, have the problem of lack of reality, since the same sounds are produced during movement such as running using legs, walking or the like.

It is therefore an object of the present invention to provide a gaming device capable of enhancing reality in sound effects as they relate to motions made by a gaming character object in a gaming space and a method of controlling a computer for the same.

### DISCLOSURE OF THE INVENTION

To achieve the foregoing object, there is provided in accordance with the present invention a gaming device that includes the following components: specifically, direction input means directing that a gaming character object disposed in a gaming space be moved on a moving plane of the gaming space; contact count counting means counting the number of times a predetermined portion of the gaming character object makes contact with the moving plane according to directions given by the direction input means; and sound output means producing an output of a sound corresponding to a count taken by the contact count counting means when the predetermined portion of the gaming character object makes contact with the moving plane.

A method of controlling a computer in accordance with the present invention represents a control method for computers including, for example, a gaming machine, a home use gaming machine, a business use gaming machine, a portable gaming machine, a personal computer, a server computer, a home server, a portable information terminal, a portable telephone, and the like. The computer control method according to the present invention includes the following steps: specifically, a direction input step receiving directions directing that a gaming character object disposed in a gaming space be moved on a moving plane of the gaming space; a contact count counting step counting the number of times a predetermined portion of the gaming character object makes contact with the moving plane according to directions received in the direction input step; and a sound output step producing an output of a sound corresponding to a count taken in the contact count counting step when the predetermined portion of the gaming character object makes contact with the moving plane.

A computer-readable information storage medium in accordance with the present invention stores a program for allowing a computer including, for example, a gaming machine, a home use gaming machine, a business use gaming machine, a portable gaming machine, a personal computer, a server computer, a home server, a portable information terminal, a portable telephone, and the like to function. The computer functions as direction input means directing that a gaming character object disposed in a gaming space be moved on a moving plane of the gaming space, contact count counting means counting the number of times a predetermined portion of the gaming character object makes contact with the moving plane according to directions given by the direction input means, and sound output means producing an output of a sound corresponding to a count taken by the contact count counting means when the predetermined portion of the gaming character object makes contact with the moving plane.

In accordance with the present invention, the number of times the predetermined portion of the gaming character object contacts the moving plane is counted and, when the predetermined portion contacts the moving plane, a sound corresponding to the count taken is produced. This arrangement helps enhance reality by the sound effects. The sound may be one that represents contact between the predetermined portion and the moving plane.

According to one embodiment of the present invention, the contact count counting means counts the number of times the predetermined portion contacts the moving plane after the direction input means issues directions of motion. This allows the output sound to be varied according to the number of contacts made after the start of the motion.

According to one embodiment of the present invention, the contact count counting means counts the number of times the predetermined portion contacts the moving plane after the directions of motion by the direction input means is stopped. This allows, for the period of time that begins when the directions of motion is stopped and ends when the motion is actually brought to a stop, the output sound to be varied according to the number of contacts made after the directions of motion is stopped.

According to one embodiment of the present invention, the sound output means includes sound data storage means storing sound data representing a plurality of the sounds in association with the count taken by the contact count counting means. The sound output means thereby reproduces the sound data stored in the sound data storage means in association with the count. This arrangement allows an output of a sound according to the number of contacts to be produced through relatively light processing.

According to one embodiment of the present invention, the sound output means includes correction means producing, based on sound data, an output of a sound that has undergone a correction made in accordance with a parameter. The correction means is supplied with a predetermined sound data and a parameter based on the count and the sound output means produces an output of a sound in accordance with the count. This arrangement allows an output of a sound according to the number of contacts to be produced saving a storage capacity.

### BRIEF DESCRIPTION OF THE DRAWINGS

FIG. 1 is a view showing a virtual three-dimensional gaming space constructed in a gaming device according to one embodiment of the present invention;
FIG. 2 is a diagram showing sound data for when the legs start running;
FIG. 3 is a diagram showing sound data for when the legs stop running;
FIG. 4 is a functional block diagram of the gaming device according to one embodiment of the present invention;
FIG. 5 and 6 are flowchart s showing processing performed by a sound control portion.

### BEST MODE FOR CARRYING OUT THE INVENTION

An embodiment of the present invention will now be described, by way of example only, and with reference to the accompanying drawings in which:

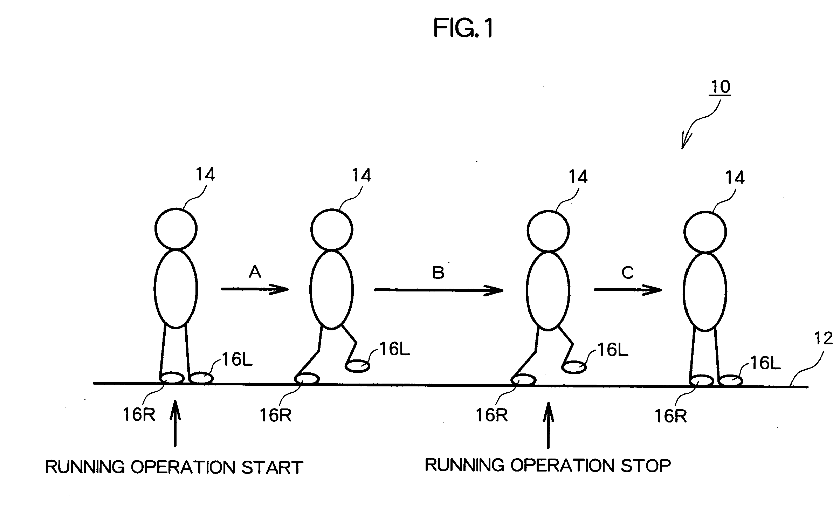

FIG. 1 is a view showing a gaming space constructed on a storage device of a gaming device according to one embodiment of the present invention. Specifically, FIG. 1 shows a gaming character object as viewed from a side for an entire sequence of running of the legs (running using legs). In the gaming device according to the embodiment of the present invention, a virtual three-dimensional gaming space (an object space) 10 is constructed on the storage device. A gaming character object 14 is disposed in the gaming space 10. The gaming character object 14 is provided with two legs and designed to move through arbitrary running or walking on a moving plane 12 in the gaming space 10 in accordance with an operation performed at an operation input portion provided for the gaming device. In FIG. 1, the moving plane 12 is drawn as a flat surface. It goes without saying that the moving plane 12 may be a curved or bumpy surface.

In FIG. 1, a stationary gaming character object 14 is shown on a left end. When an operation that directs running of the legs is performed by the operation input portion in this condition (when a predetermined button is pressed, in this case), the gaming character object 14 is moved in the gaming space 10 in a direction corresponding to a content of the operation as shown by the gaming character objects 14 at the second and the third positions from the left end. At this time, motion data representing conditions of the gaming character object 14 that uses legs to run is used. If the operation directing the running of the legs is stopped (when the press of the predetermined button is canceled (the button is released), in this case) at a timing shown by the gaming character 14 at the second position from a right end in FIG. 1, the gaming character object 14 is designed to move forward a predetermined number of steps (six steps, in this case) therefrom and be brought to a stop thereat.

In this gaming device, footsteps are output from a speaker while the gaming character object 14 is making its legs run. Especially for the first eight steps (four steps each by the right and left leg; section A in FIG. 1), footsteps with a suppressed upper register are output. Ordinary footsteps are output thereafter (in section B of FIG. 1) . When the operation directing the running of the legs is stopped while making the gaming character object 14 move on the moving plane 12, footsteps with a suppressed upper register are output once again for the motion of six steps (three steps each by the right and left leg; section C in FIG. 1) before a standstill.

To perform this processing, this gaming device monitors a timing, at which a left leg 16L and a right leg 16R contact the moving plane 12, thereby taking the count of this timing for the left leg 16L and the right leg 16R, respectively, when reproduction of the motion data representing the gaming character 14 that uses legs to run as a result of the operation directing the running of the legs is started. When the operation directing the running of the legs is stopped, the gaming device monitors the timing, at which the left leg 16L and the right leg 16R contact the moving plane 12, thereby taking the count of this timing for the left leg 16L and the right leg 16R, respectively. The sound data for when the legs start running or the sound data for when the legs stop running corresponding to the count taken in this manner is then reproduced to produce an output for the footsteps.

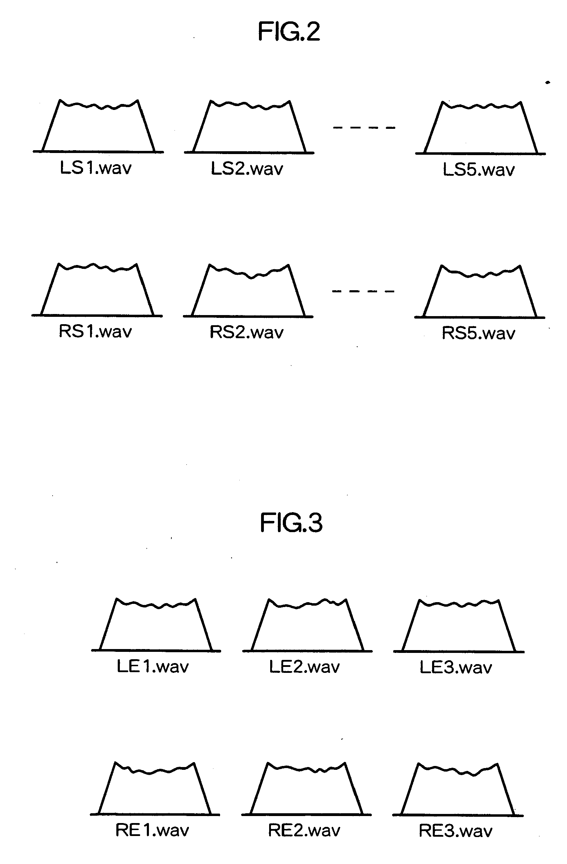

The sound data for when the legs start running and the sound data for when the legs stop running will be described. Referring to FIG. 2, the storage device of this gaming device stores sound data for when the legs start running LSn.wav (n = 1 to 5) that represents the n-th footstep emitted by the left leg 16L after the operation directing the running of the legs is performed and sound data for when the legs start running RSn.wav (n = 1 to 5) that represents the n-th footstep emitted by the right leg 16R after the operation directing the running of the legs is performed in advance. Furthermore, the storage device of this gaming device stores sound data for when the legs stop running LEn.wav (n = 1 to 3) that represents the n-th footstep emitted by the left leg 16L after the operation directing the running of the legs is stopped and sound data for when the legs stop running REn.wav (n = 1 to 3) that represents the n-th footstep emitted by the right leg 16R after the operation directing the running of the legs is stopped in advance.

When it is determined that the left leg 16L contacts the moving plane 12 n times after the operation directing the running of the legs is performed, the gaming device acquires the sound data for when the legs start running LSn.wav corresponding to the left leg 16L and the count n at the n-th contact and starts reproducing the sound data (n = 1 to 4). At the 5th and subsequent contacts, the gaming device acquires sound data for when the legs start running LS5.wav and starts reproducing the sound data. Similarly, when it is determined that the right leg 16R contacts the moving plane 12 n times after the operation directing the running of the legs is performed, the gaming device acquires the sound data for when the legs start running RSn.wav corresponding to the right leg 16R and the count n at the n-th contact and starts reproducing the sound data (n = 1 to 4). At the 5th and subsequent contacts, the gaming device acquires sound data for when the legs start running RS5.wav and starts reproducing the sound data.

When the operation directing the running of the legs is stopped (when the press of the button for directing the running of the legs is canceled in this case), reproduction of motion data representing the gaming character 14 being brought to a stop is started. At this time, the gaming device monitors a timing, at which the operation directing the running of the legs is canceled. When it is determined that the left leg 16R contacts the moving plane 12 n times after the operation directing the running of the legs is canceled, the sound data for when the legs stop running LEn.wav corresponding to the left leg 16L and count n at the n-th contact is acquired and reproduction of the sound data is started. Similarly, when it is determined that the right leg 16R contacts the moving plane 12 n times after the operation directing the running of the legs is performed, the sound data for when the legs stop running REn.wav corresponding to the right leg 16R and count n at the n-th contact is acquired and reproduction of the sound data is started.

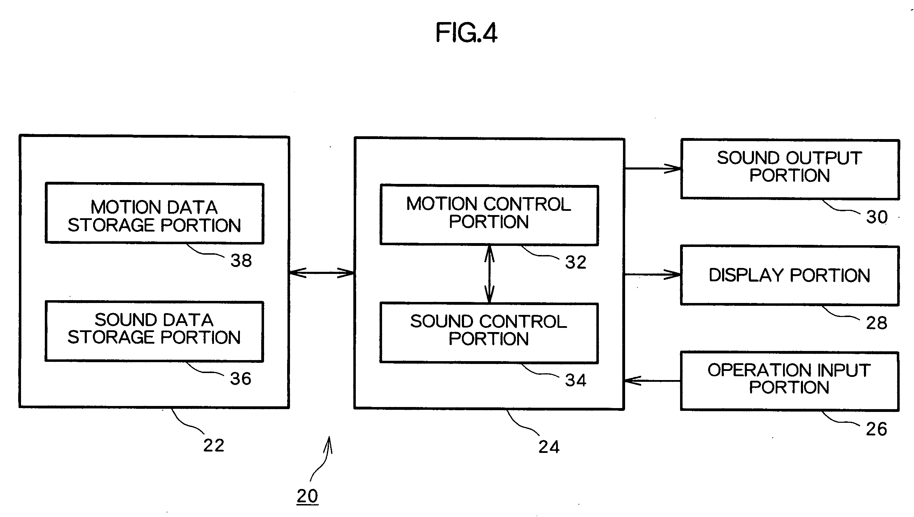

FIG. 4 is a block diagram of the gaming device according to the embodiment of the present invention. Referring to FIG. 4, a gaming device 20 according to the embodiment of the present invention includes a storage portion 22, a control portion 24, an operation input portion 26, a display portion 28, and a sound output portion 30. The storage portion 22 is formed by including one or a combination of, for example, the following parts: a RAM, a ROM, a hard disk storage device, a CD-ROM, a DVD-ROM, and the like. The storage portion 22 is comprising a motion data storage portion 38 storing motion data and a sound data storage portion 36 storing sound data. The motion data stored in the motion data storage portion 38 includes motion data for achieving motion in sections A and B shown in FIG. 1 and motion data for achieving motion in section C. That is, the motion data is data representing motions of different body parts of the gaming character object 14. The sound data stored in the sound data storage portion 36 includes the sound data for when the legs start running shown in FIG. 2 and the sound data for when the legs stop running shown in FIG. 3.

The operation input portion 26 is provided, for example, with a pushbutton and a stick member, and is used particularly for directing the gaming character object 14 disposed in the gaming space 10 to move on the moving plane 12 in the gaming space 10. The display portion 28 is formed by, for example, a computer display or a home use TV set, producing an output of a gaming image generated by the control portion 24. The gaming image may, for example, represent a condition of the gaming space as viewed from a viewpoint set in the gaming space 10. The sound output portion 30 is comprising a speaker and a sound synthesis IC for converting the sound data included in the sound data storage portion 36 to a corresponding analog sound signal. Specifically, when the sound data is input from the control portion 24, or a sound control portion 34 in particular, the sound output portion 30 converts the sound data to a corresponding analog sound signal and outputs the same from the speaker. The speaker may, for example, be one built into the home use TV set.

The control portion 24 is comprising, for example, a home use gaming machine, a business use gaming machine, a portable gaming machine, a personal computer, a portable information terminal, a portable telephone, or other type of computer. The control portion 24 is realized by letting the computer run a program, to which the present invention is applied. This program may be supplied to the control portion 24 by means of an information storage medium, such as a CD-ROM, a DVD-ROM, or the like, or downloaded thereto through a data communications network such as the Internet. The program executed by the control portion 24 is a gaming program in this case and includes, in particular, one for realizing a motion control portion 32 and a sound control portion 34. The motion control portion 32 changes the position and posture of the gaming character object 14 in the gaming space 10 for every predetermined period of time based on the motion data stored in the motion data storage portion 38, thereby causing the gaming character object 14 to run using legs or otherwise move in the gaming space 10. At this time, the motion control portion 32 determines a specific posture the gaming character object 14 currently takes. In particular, if the motion data representing the running of the legs is reproduced to let the gaming character object 14 run using legs in the gaming space, a timing at which the gaming character object 14 takes a posture of making the left leg 16L and the right leg 16R contact the moving plane 12 is determined. The results of this decision are notified to the sound control portion 34. That is, the motion control portion 32 determines the timing, at which the left leg 16L and the right leg 16R of the gaming character object 14 are to contact the moving plane 12, based on the position of reproduction of the motion data.

The sound control portion 34 counts the number of times the left leg 16L and the right leg 16R of the gaming character object 14 contact the moving plane 12 according to the directions given by the operation input portion 26. Specifically, when the operation input portion 26 gives directions (of the start) of the running of the legs, it is started to take a count of each of the number of times the left leg 16L and the right leg R of the gaming character object 14 contact the moving plane 12, respectively. When the operation input portion 26 stops directions of the running of the legs, a count is started of the number of times the left leg 16L and the right leg R of the gaming character object 14 contact the moving plane 12, respectively. As long as the running of the legs is being directed, therefore, the sound control portion 34 repeatedly sends an inquiry to the motion control portion 32 to determine whether or not the left leg 16L or the right leg R of the gaming character object 14 contacts the moving plane 12.

When it is determined that the left leg 16L or the right leg R of the gaming character object 14 contacts the moving plane 12, the sound control portion 34 causes the sound output portion 30 to produce an output of a sound according to the count taken as described in the foregoing. Specifically, the sound control portion 34 sends an inquiry to the motion control portion 32. If it is determined that the left leg 16L or the right leg 16R of the gaming character object 14 contacts the moving plane 12, the sound control portion 34 reads, from the sound data storage portion 36, the sound data corresponding to the number of contacts made by that particular leg for the period of time that begins when the running of the legs is directed or the directions of the running of the legs are canceled and that ends when the current contact is made, and the specific leg in question (either left or right). The sound control portion 34 then inputs the sound data to the sound output portion 30. Through these procedures, it is possible to produce an output of a sound corresponding to the number of contacts made by the left leg 16L or the right leg 16R with the moving plane 12 after the directions of the running of the legs have been issued.

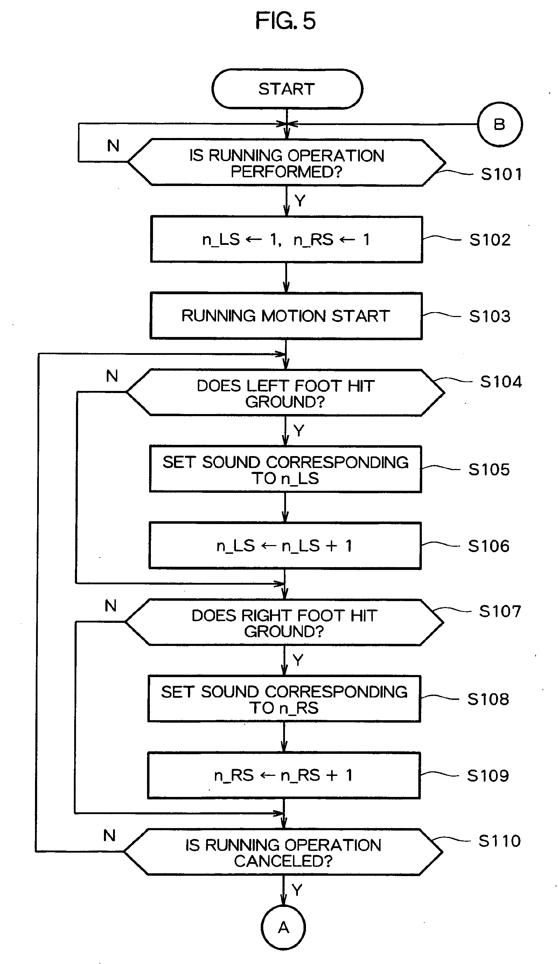

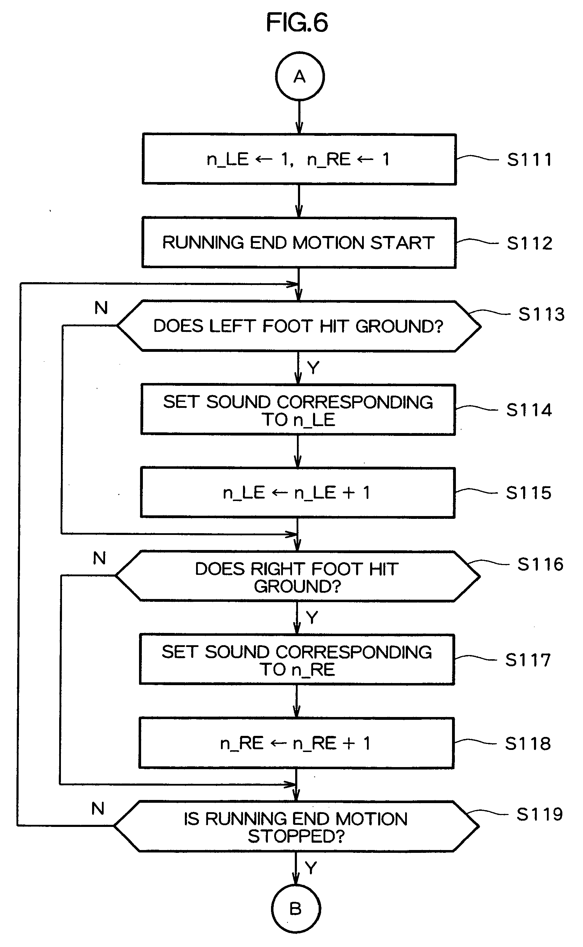

FIGS. 5 and 6 are flowcharts showing processing performed by the sound control portion 34. As shown in FIGS. 5 and 6, the sound control portion 34 monitors whether or not the operation input portion 26 gives directions of the running of the legs (S101) . If the running of the legs is directed, 1 is set for a variable n_LS representing the number of contacts made by the left leg 16L of the gaming character object 14 with the moving plane 12 after the running of the legs has been directed and 1 is also set for a variable n_RS representing the number of contacts made by the right leg 16R of the gaming character object 14 with the moving plane 12 after the running of the legs has been directed (S102). The start of a motion of the running of the legs (a running motion) is then directed to the motion control portion 32 (S103) . The motion control portion 32 then reads, from the motion data storage portion 38, the motion data representing the running of the legs (sections A and B) and, based on the motion data read, calculates positions and postures of the gaming character object 14 sequentially as the object 14 uses legs to run in the gaming space 10.

The sound control portion 34 further sends an inquiry to the motion control portion 32 as to whether or not the left leg 16L contacts the moving plane 12 (S104) . If the left leg contacts, the sound control portion 34 reads one of a plurality of pieces of sound data LS1.wav to LS5.wav corresponding to the variable n_LS from the sound data storage portion 36. The sound control portion 34 then supplies the data to the sound output portion 30 and lets the sound output portion 30 output a footstep (S105) . If, at this time, n_LS is 1 to 4, sound data LS1.wav to LS4.wav is read and reproduced. If n_LS is 5 or more, sound data LS5.wav is read and reproduced. The value of the variable n_LS is then incremented by 1 (S106). If it is determined in S104 that the left leg 16L does not contact the moving plane 12, on the other hand, steps S105 and S106-noted above are skipped.

The sound control portion 34 sends an inquiry to the motion control portion 32 as to whether or not the right leg 16R contacts the moving plane 12 (S107). If the right leg contacts, the sound control portion 34 reads one of a plurality of pieces of sound data RS1.wav to RS5.wav corresponding to the variable n_RS from the sound data storage portion 36. The sound control portion 34 then supplies the data to the sound output portion 30 and lets the sound output portion 30 output a footstep (S108). If, at this time, n_RS is 1 to 4, sound data RS1. wav to RS4.wav is read and reproduced. If n_RS is 5 or more, sound data RS5 . wav is read and reproduced. The value of the variable n_RS is then incremented by 1 (S109). If it is determined in S107 that the right leg 16R does not contact the moving plane 12, on the other hand, steps S108 and S109 noted above are skipped.

The sound control portion 34 thereafter determines whether or not the directions of the running of the legs by the operation input portion 26 are stopped (S110). If the directions are not stopped, steps from S104 to S110 are performed once again. If, on the other hand, the directions of the running of the legs are stopped, 1 is set for a variable n_LE representing the number of contacts made by the left leg 16L of the gaming character object 14 with the moving plane 12 after the directions of the running of the legs has been stopped and 1 is also set for a variable n_RE representing the number of contacts made by the right leg 16R of the gaming character object 14 with the moving plane 12 after the directions of the running of the legs has been stopped (S111). The start of a motion of stopping the run leg (a running end motion) is directed to the motion control portion (S112). The motion control portion 32 then reads, from the motion data storage portion 38, the motion data representing a stop of the running of the legs (section C) and, based on the motion data read, calculates positions and postures of the gaming character object 14 sequentially as the object 14 gradually (within several steps) comes to a standstill in the gaming space 10.

The sound control portion 34 further sends an inquiry to the motion control portion 32 as to whether or not the left leg 16L contacts the moving plane 12 (S113) . If the left leg makes contact, the sound control portion 34 reads one of a plurality of pieces of sound data LE1.wav to LE3. wav corresponding to the variable n_LE from the sound data storage portion 36. The sound control portion 34 then supplies the data to the sound output portion 30 and lets the sound output portion 30 output a footstep (S114). If, at this time, n_LE is 1 to 2, sound data LE1. wav to LE2.wav is read and reproduced. If n_LE is 3 or more, sound data LE3.wav is read and reproduced. The value of the variable n_LE is then incremented by 1 (S115). If it is determined in S113 that the left leg 16L does not contact the moving plane 12, on the other hand, steps S114 and S115 noted above are skipped.

The sound control portion 34 next sends an inquiry to the motion control portion 32 as to whether or not the right leg 16R contacts the moving plane 12 (S116). If the right leg makes contact, the sound control portion 34 reads one of a plurality of pieces of sound data RE1.wav to RE3.wav corresponding to the variable n_RE from the sound data storage portion 36. The sound control portion 34 then supplies the data to the sound output portion 30 and lets the sound output portion 30 output a footstep (S117) . If, at this time, n_RE is 1 to 2, sound data RE1.wav to RE2.wav is read and reproduced. If n_RE is 3 or more, sound data RE3.wav is read and reproduced. The value of the variable n_RE is then incremented by 1 (S118) . If it is determined in S116 that the right leg 16R does not make contact with the moving plane 12, on the other hand, steps S117 and S118 noted above are skipped.

The sound control portion 34 thereafter determines whether or not the reproduction of the motion data by the motion control portion 32 is completed (S119). If reproduction is not completed, steps S113 to S119 are executed once again. If the reproduction is completed, on the other hand, whether or not directions of the running of the legs are given again by the operation input portion 26 is monitored (S101).

According to the gaming device 20 as described in the foregoing, when the gaming character object 14 is directed to run using legs in the gaming space 10, the number of contacts made by the left leg 16L or the right leg 16R with the moving plane 12 in the gaming space 10 is counted after the directions have been input and the output of footsteps in accordance with the number of contacts is produced. When the directions of the running of the legs are stopped, the number of contacts made by the left leg 16L or the right leg 16R with the moving plane 12 in the gaming space 10 is counted after the stop and the output of footsteps in accordance with the number of contacts is produced. Virtual reality can be enhanced in this manner.

The present invention is not limited to the embodiment described in the foregoing.

In accordance with the embodiment of the present invention described in the foregoing, the sound data is reproduced and output according to the number of contacts made by the left leg 16L or the right leg 16R with the moving plane 12 after the directions of the running of the legs or the stop thereof. Instead of the foregoing, the following arrangement, for example, may still be possible. Specifically, the sound output portion 30 or the sound control portion 34 is allowed to make a correction of the sound reproduced and output based on the sound data according to a parameter. When the left leg 16L or the right leg 16R contacts the moving plane 12 in the gaming space 10, a sound correction is made according to a parameter according to the number of contacts after the directions of the running of the legs or the stop thereof. An output of a sound according to the number of contacts after the directions of the running of the legs or the stop thereof can thereby be produced.

In accordance with the embodiment of the present invention described in the foregoing, the running of the legs is directed by the press of the button provided in the operation input portion 26 and the directions of the running of the legs are stopped when the press of the button is canceled. The stick member provided in the operation input portion 26 may, instead, be used. When the stick member is inclined to a predetermined inclined angle or more, it is determined that directions are given to make the legs run in the direction in which the stick member is inclined. When the inclination of the stick member is corrected to an angle less than the predetermined inclined angle, it is determined that the directions to make the legs run are stopped.

In addition, in the descriptions given heretofore, the contact of the left leg 16L or the right leg 16R with the moving plane 12 is determined based on the position of reproduction of the motion data. This may, instead, be made based on the position of the moving plane 12, the position of the left leg 16L, and the position of the right leg 16R in the gaming space 10.

### INDUSTRIAL APPLICABILITY

As described above, the present invention is applicable to a computer such as game machine. In this invention, it is possible to enhance reality in sound effects by counting the number of times a predetermined portion of the gaming character object makes contact with the moving plane and by outputting a sound corresponding to the count when the predetermined portion makes contact with the moving plane.

## Claims

1. A gaming device, comprising:
direction input means directing that a gaming character object disposed in a gaming space be moved on a moving plane of the gaming space;
contact count counting means counting the number of times a predetermined portion of said gaming character object makes contact with said moving plane according to directions given by said direction input means; and
sound output means producing an output of a sound corresponding to a count taken by said contact count counting means when said predetermined portion of said gaming character object makes contact with said moving plane.

2. The gaming device according to claim 1, wherein said contact count counting means counts the number of times said predetermined portion contacts said moving plane after a motion is directed by said direction input means.

3. The gaming device according to claim 1 or 2, wherein said contact count counting means counts the number of times said predetermined portion contacts said moving plane after directions of motion by said direction input means is stopped.

4. The gaming device according to claim 1, wherein said sound output means produces an output of a sound representing a contact of said predetermined portion with said moving plane.

5. The gaming device according to claim 1, wherein said sound output means includes sound data storage means storing sound data representing a plurality of said sounds in association with the count taken by said contact count counting means, and said sound output means thereby reproduces the sound data stored in said sound data storage means in association with said count and accordingly produces an output of the sound according to said count.

6. The gaming device according to claim 1, wherein said sound output means includes correction means producing, based on sound data, an output of a sound that has undergone a correction made in accordance with a parameter, said correction means is supplied with a predetermined sound data and a parameter based on said count, and said sound output means produces an output of a sound in accordance with said count.

7. A method of controlling a computer, comprising the steps of:
a direction input step receiving directions directing that a gaming character object disposed in a gaming space be moved on a moving plane of said gaming space;
a contact count counting step counting the number of times a predetermined portion of said gaming character object makes contact with said moving plane according to directions received in said direction input step; and
a sound output step producing an output of a sound corresponding to a count taken in said contact count counting step when said predetermined portion of said gaming character object makes contact with said moving plane.

8. A computer-readable information storage medium storing a program for allowing a computer to function as means comprising:
direction input means directing that a gaming character object disposed in a gaming space be moved on a moving plane of said gaming space;
contact count counting means counting the number of times a predetermined portion of said gaming character object makes contact with said moving plane according to directions given by said direction input means; and
sound output means producing an output of a sound corresponding to a count taken by said contact count counting means when said predetermined portion of said gaming character object makes contact with said moving plane.
